# EUROPEAN PATENT SPECIFICATION

(11) **EP 4 154 773 B1**
(45) Date of publication and mention of the grant of the patent: **11.03.2026**
(21) Application number: 22197072.6
(22) Date of filing: 22.09.2022
(51) Int. Cl.: A47J 27/022, A47J 36/24

(54) **ELECTRICALLY HEATED COOKING DEVICE**
ELEKTRISCH BEHEIZTES GARGERÄT
APPAREIL DE CUISSON À CHAUFFAGE ÉLECTRIQUE

(30) Priority: 24.09.2021 DK PA202100902
(43) Date of publication of application: 29.03.2023
(73) Proprietor: Norqi ApS, 5210 Odense NV (DK)
(72) Inventor: Larfort, Jesper Bang, 5210 Odense NV (DK); Hansen, Søren, 5320 Agedrup (DK)
(74) Representative: Andreasen, Søren Laursen Vasegaard

(56) References cited:
- WO-A1-2009/036653
- WO-A1-2013/134239
- WO-A1-2016/077360
- WO-A1-2019/083005
- WO-A1-2020/182262

## Description

### Field of invention

The present invention relates to an electrically heated cooking device according to claim 1.

### Prior art

Electrically heated cooking devices are known in the prior art. The prior art electrically heated cooking devices comprise electrical heating elements that are arranged to generate heat that is distributed towards a heating surface.

In many situations it is, however, difficult to regulate the temperature in a manner that is accurate and fast enough.

US2003178411A1 discloses a steam cooker comprising a cooking compartment that is accessible through a door and a supply of water and a heating element disposed to heat said water supply to produce steam in said cooking compartment. The steam cooker comprises a steam outlet formed in said housing and in fluid communication with the interior of said cooking compartment and an automatic electric steam trap connected to said vapor outlet, said steam trap being normally open to the atmosphere, and closing when the temperature of the steam in the cooking cavity measured adjacent said steam outlet is at or over a preselected operating temperature. The steam cooker is, however, not suitable for providing an accurate and fast temperature regulation.

WO2009036653A1 discloses an electrical pressure cooker comprising an external cooker, an internal cooker, a sealing device, an electrical heating device, a flexible element, a safety device and a controlling circuit configured to control the electrical pressure cooker. The electrical pressure cooker comprises a capacitance sensor connected to the controlling circuit in a manner, in which controlling circuit processes the signal and controls the electrical pressure cooker on the basis of the signal. It would be desirable to provide an electrically heated cooking device that can be temperature regulated in a fast manner, wherein the electrically heated cooking device has an improved heat transfer. The prior art documents WO 2013/134239 A1, WO 2019/083005 A1, WO 2016/077360 A1 and WO 2020/182262 A1 also disclose electrically heated cooking devices.

Accordingly, it is desirable to have an electrically heated cooking device that can be temperature regulated in a more accurate and faster manner and in which the heat transfer is improved compared to the prior art electrically heated cooking devices.

Therefore, it is an object of the invention to provide an electrically heated cooking device that can be temperature regulated in a more accurate and faster manner than the prior art solutions.

### Summary of the invention

The object of the present invention can be achieved by an electrically heated cooking device as defined in claim 1. Preferred embodiments are defined in the dependent subclaims, explained in the following description and illustrated in the accompanying drawings.

The electrically heated cooking device according to the invention is an electrically heated cooking device that comprises a housing having an inner space that comprises a heating surface being the upper surface of a bottom section, wherein the inner space is defined by a side wall extending from the heating surface, wherein the inner space is configured to receive foodstuff or a liquid to be cooked or heated, wherein the electrically heated cooking device comprises a plurality of electrical heating elements integrated in a heat distributing portion provided below and being in thermal contact with the bottom section, wherein the electrically heated cooking device comprises a control unit configured to regulate the heat generation of the electrical heating elements, wherein the electrically heated cooking device comprises a temperature sensor arranged in a hole extending through the heat distributing portion, wherein the temperature sensor is spring loaded so that a force presses the temperature sensor in a direction towards the heating surface, wherein the temperature sensor is communicatively connected to the control unit, wherein the heat distributing portion is constituted of an upper thermally conducting layer and a lower thermally conducting layer, the lower thermally conducting layer being arranged below the upper thermally conducting layer, wherein a plurality of threaded bolts extending from the bottom side of the bottom section, wherein the bolts extend through bores provided in the layers arranged below the bottom section, wherein a nut is attached to each bolt in order to press the heat distributing portion towards the bottom section.

Hereby, it is possible to provide an electrically heated cooking device that can be temperature regulated in a more accurate and faster manner than the prior art electrically heated cooking devices.

The electrically heated cooking device can be any type of cookware.

In one embodiment, the electrically heated cooking device is a saucepan.

In one embodiment, the electrically heated cooking device is a frying pan.

In one embodiment, the electrically heated cooking device is a kettle.

The housing may have any suitable size and geometry. The inner space comprises a heating surface being the upper surface of a bottom section. The heating surface is configured to provide heat transfer to the foodstuff in the inner space.

The inner space is defined by a side wall extending from the heating surface and the inner space is configured to receive foodstuff or a liquid to be cooked or heated.

The electrically heated cooking device comprises a plurality of electrical heating elements integrated in a heat distributing portion provided below and being in thermal contact with the bottom section. The size and geometry of the electrical heating elements will typically depend on the geometry of the heating surface.

In one embodiment, the electrical heating elements are formed from a cylindrical electrically conducting structure that is bent. A portion of an electrical heating element may be U-shaped or W-shaped by way of example.

The electrically heated cooking device comprises a control unit configured to regulate the heat generation of the electrical heating elements on the basis of temperature measurements made by means of the temperature sensor. The control unit enables the user to regulate the power of the electrically heated cooking device and provide the desired temperature of the heating surface.

The electrically heated cooking device comprises a temperature sensor arranged in a hole extending through the heat distributing portion, wherein the temperature sensor is spring loaded so that a force presses the temperature sensor in a direction towards the heating surface. Hereby, it is possible to detect the temperature of the heating surface in a fast and very accurate manner. Accordingly, it is possible to provide an electrically heated cooking device that can be temperature regulated in a more accurate and faster manner.

In one embodiment, the temperature sensor is a tip sensitive temperature sensor. In one embodiment, the temperature sensor comprises a metalized tipped construction. In one embodiment, the temperature sensor comprises a copper tipped construction for fast thermal response. In one embodiment, the distal portion of the senor is cylindrical.

In one embodiment, the electrically heated cooking device comprises more than one temperature sensor, wherein each temperature sensor is arranged in a hole extending through the heat distributing portion.

In one embodiment, the electrically heated cooking device comprises two temperature sensors each being communicatively connected to the control unit.

In one embodiment, the electrically heated cooking device comprises three temperature sensors each being communicatively connected to the control unit.

In one embodiment, the electrically heated cooking device comprises four temperature sensors each being communicatively connected to the control unit.

In one embodiment, the electrically heated cooking device comprises five or more temperature sensors each being communicatively connected to the control unit.

In one embodiment, the heating surface is flat. This may be an advantage since production of the layered structures arranged under the bottom section is eased significantly.

In one embodiment, the distance between the temperature sensor and the heating surface is less than 10 cm.

In one embodiment, the distance between the temperature sensor and the heating surface is less than 6 cm.

In one embodiment, the distance between the temperature sensor and the heating surface is less than 4 cm.

In one embodiment, the distance between the temperature sensor and the heating surface is less than 3 cm.

In one embodiment, the distance between the temperature sensor and the heating surface is less than 2 cm.

In one embodiment, the hole extends through the entire heat distributing portion and the temperature sensor abuts the bottom section. Hereby, it is possible to facilitate reliable temperature measurements by means of the sensor.

In one embodiment, the hole extends through a portion of the bottom section. Hereby, the distance between the temperature sensor and the heating surface can be even further reduced. Accordingly, it is possible to provide very accurate temperature measurements of the heating surface. Moreover, temperature changes can be detected very fast due to the short distance.

In one embodiment, the longitudinal axis of the sensor extends perpendicular to the heating surface. Hereby, the temperature sensor can provide the most optimum measurements.

According to the present invention, the heat distributing portion comprises an upper thermally conducting layer, wherein the electrical heating elements may be arranged in a layer adjacent to and below the upper thermally conducting layer. Hereby, the thermally conducting layer can provide an improved heat distribution towards the heating surface.

In one embodiment, the upper thermally conducting layer is made of metal.

In a preferred embodiment, the upper thermally conducting layer is made of aluminium.

According to the present invention, a lower thermally conducting layer is arranged below the upper thermally conducting layer, wherein the electrical heating elements may be arranged in tracks provided in the lower thermally conducting layer. Hereby, it is possible to provide an efficient heat distributing portion.

It may be an advantage that the thickness of the lower thermally conducting layer corresponds to the thickness of the electrical heating elements.

In one embodiment, the lower thermally conducting layer is made of metal.

In a preferred embodiment, the lower thermally conducting layer is made of aluminium.

In one embodiment, the lower thermally conducting layer is segmented into a two layer structure.

In one embodiment, the upper thermally conducting layer is arranged under a thermally conductive filling material that is sandwiched between the upper thermally conducting layer and the bottom section.

The thermally conductive filling material may be any suitable heat transfer compounds. In one embodiment, the heat transfer coefficient, of the thermally conductive filling material is in the range 85-170 w/m² °C.

In one embodiment, the bond strength of the thermally conductive filling material is 2760 kPa or more. One example of such thermally conductive filling material is the "Thermon T-99 Heat Transfer Compound" supplied by the company Thermon Inc.

Accordingly, any air gaps provided in abutting surfaces of the upper thermally conducting layer and the bottom section will be filled out with the thermally conductive filling material. Since the thermal resistance of the thermally conductive filling material is much lower than the thermal resistance of air, filling out the air gaps with thermally conductive filling material will enable an improved heat transfer from the electrical heating element to the heating surface.

In one embodiment, a thermally insulating layer is arranged below the lower thermally conducting layer or below the upper thermally conducting layer if the electrically heated cooking device comprises no lower thermally conducting layer.

The thermally insulating layer is arranged and configured to thermally insulate the heat distributing portion and thus the lower thermally conducting layer from components below the heat distributing portion.

Accordingly, the thermally insulating layer will minimize the heat loss caused by heat transfer in downwards direction.

In one embodiment, the thermally insulating layer is a plate structure that is form-stable even when a compressive force is exerted to it.

In one embodiment, the thermally insulating layer is a sheet material.

In one embodiment, the thermally insulating layer comprises a radiant barrier and reflective insulation portion.

In one embodiment, the thermally insulating layer is a reflective thermal insulation.

In one embodiment, the thermally insulating layer is a laminated material made from phlogopite mica foil and biosoluble fiber paper, wherein the mica foil is reinforced with a glass cloth for better tensile strength during handling and application. One example of such thermally insulating layer is the "ISO-combi" supplied by the company SKANACID A/S (WWW.SKANACID.DK).

The electrically heated cooking device comprises a plurality of threaded bolts extending from the bottom side of the bottom section, wherein the bolts extend through bores provided in the layers arranged below the bottom section, wherein a nut is attached to each bolt (and optionally a washer) in order to press the heat distributing portion towards the bottom section.

Hereby, it is possible to attach the layered structures arranged under the bottom section to the bottom section in a reliable and efficient manner.

In one embodiment, the electrically heated cooking device comprises a closing plate that is provided below the heat distributing portion, wherein the closing plate is configured to clamp the components of the heat distributing portion together. Hereby, it is possible to use the closing plate to clamp against the remaining layered structures arranged under the bottom section.

In one embodiment, the closing plate is made of metal.

In a preferred embodiment, the closing plate is made of steel.

It may be an advantage that the side wall extends basically perpendicular to the heating surface.

In one embodiment, the heating surface is circular.

In one embodiment, the heating surface is rectangular.

### Description of the Drawings

The invention will become more fully understood from the detailed description given herein below. The accompanying drawings are given by way of illustration only, and thus, they are not limitative of the present invention.

In the accompanying drawings:
- Fig. 1: shows a schematic cross-sectional side view of an electrically heated cooking device;
- Fig. 2: shows a close-up cross-sectional view of a portion of the electrically heated cooking device shown in Fig. 1;
- Fig. 3: shows an electrically heated cooking device seen from below;
- Fig. 4: shows a cross-sectional view of a portion of an electrically heated cooking device;
- Fig. 5: shows a cross-sectional view of a portion of an electrically heated cooking device without a thermally conductive filling material provided between the bottom section and the adjacent thermally conducting layer;
- Fig. 6: shows the electrically heated cooking device shown in Fig. 5, in a configuration, in which a thermal conductive filling material provided between the bottom section and the adjacent thermally conducting layer;
- Fig. 7: shows a schematic view of a configuration of the electrical heating elements of an electrically heated cooking device;
- Fig. 8: shows a perspective view of the bottom side of the bottom portion of an electrically heated cooking device;
- Fig. 9: shows a cross-sectional view of a portion of an electrically heated cooking device;
- Fig. 10A: shows a bottom view of a bottom section of an electrically heated cooking device;
- Fig. 10B: shows a bottom view of a heat distributing portion of an electrically heated cooking device;
- Fig. 10C: shows a bottom view of the heat distributing portion shown in Fig. 10B in a configuration, in which a finger section is being removed in order to make the underlying component visible;
- Fig. 10D: shows a bottom view of the heat distributing portion shown in Fig. 10C in a configuration, in which the finger section has been removed;
- Fig. 11A: shows a bottom view of the heat distributing portion shown in Fig. 10D in a configuration, in which a central section is being removed in order to make the underlying component visible;
- Fig. 11B: shows a bottom view of the heat distributing portion shown in Fig. 11A in a configuration, in which a finger section is being removed;
- Fig. 11C: shows the heat distributing portion shown in Fig. 11B in a configuration, in which the finger section has been removed;
- Fig. 12A: shows a schematic view of an electrically heated cooking device and
- Fig. 12B: shows an electrically heated cooking device.

### Detailed description of the invention

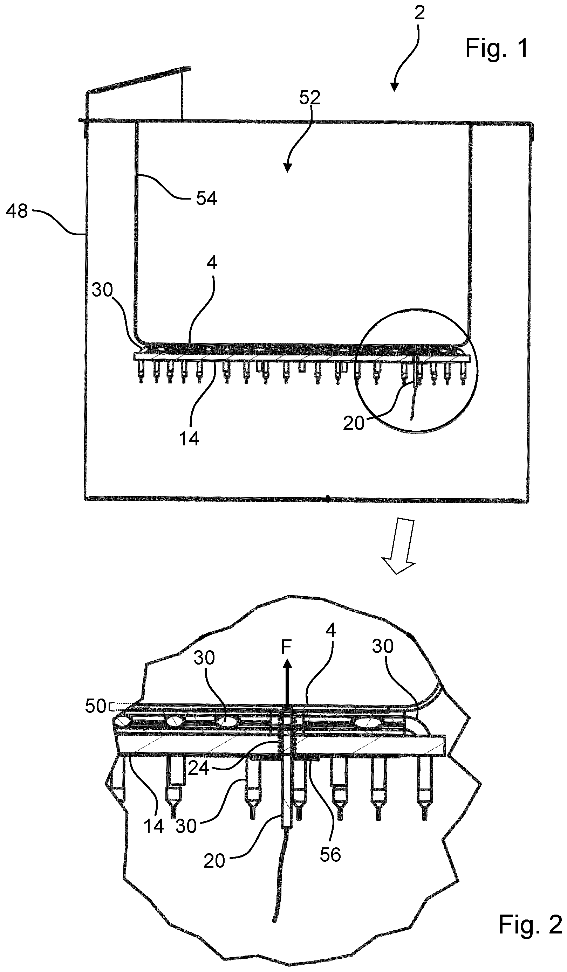

Referring now in detail to the drawings for the purpose of illustrating preferred embodiments of the present invention, an electrically heated cooking device 2 is illustrated in Fig. 1.

Fig. 1 is a schematic cross-sectional side view of an electrically heated cooking device 2. The electrically heated cooking device 2 comprises a housing 48 and an inner space 52 defined by a side wall 54 extending from a heating surface 4. The inner space 52 is configured to receive foodstuff or a liquid to be cooked or heated.

The electrically heated cooking device 2 comprises a plurality of electrical heating elements 30 integrated in the section provided below the heating surface 4. The electrical heating elements 30 are distributed to provide an efficient heating of the heating surface 4 and thus foodstuff or a liquid in the inner space 52.

In a preferred embodiment, the heating surface 4 is flat. It may be an advantage that the side wall 54 extends basically perpendicular to the heating surface 4.

In one embodiment, the heating surface 4 is circular.

In one embodiment, the heating surface 4 is rectangular.

The electrically heated cooking device 2 comprises a closing plate 14 that is provided below a multi-layer structure in order to clamp the components of the multi-layer structure together. The closing plate 14 can preferably be made in metal. In a preferred embodiment, the closing plate 14 is made of steel.

In one embodiment, the electrically heated cooking device 2 is a saucepan.

In one embodiment, the electrically heated cooking device 2 is a frying pan.

In one embodiment, the electrically heated cooking device 2 is a kettle.

The electrically heated cooking device 2 may be any type of cookware.

Fig. 2 illustrates a close-up cross-sectional view of a portion of the electrically heated cooking device 2 shown in Fig. 1. It can be seen that a plurality of electrical heating elements 30 extend parallel to and along the heating surface 4. Hereby, it is possible to have a heating source in close distance to the heating surface 4. A thermally conducting layer is, however, arranged between the electrical heating elements 30 and the heating surface 4 in order to provide an improved distribution of the heat generated by the electrical heating elements 30. In a preferred embodiment, the thermally conducting layer is made of metal. In a particular preferred embodiment, the thermally conducting layer comprises or is made of aluminium.

It can be seen that the electrical heating elements 30 have an end portion that extends downwards perpendicular to the heating surface 4. The electrical heating elements 30 are electrically connected to a control box (not shown) that is configured to regulate the heat generation rate of the electrical heating elements 30.

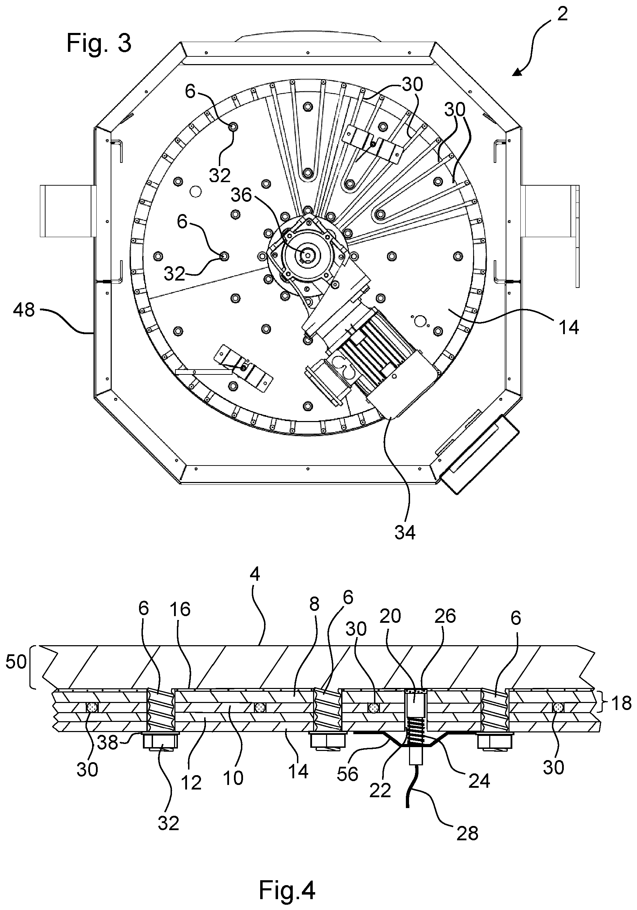

It can be seen that the closing plate 14 is arranged under the electrical heating elements 30. The closing plate 14 can be clamped towards the structures arranged under the heating surface 4 by means of nuts that are attached to bolts extending from the bottom side of the bottom section 50 constituting the structure having the heating surface 4 as its top surface. This is shown in and explained with reference to Fig. 4

The electrically heated cooking device 2 comprises a temperature sensor 20 arranged in a bore providing access to the bottom section 50. The temperature sensor 20 is arranged close to the heating surface 4.

The temperature sensor 20 has a cylindrical body portion. A spring 24 rests on a mounting structure 56 and surrounds the cylindrical body portion of the temperature sensor 20. Accordingly, the spring 24 provides a force F that presses the temperature sensor 20 towards the heating surface 4. Therefore, the position of the temperature sensor 20 is optimised with the purpose of detecting the temperature of the heating surface 4. In one embodiment, the distance between the temperature sensor 20 and the heating surface 4 is less than 10 cm. In one embodiment, the distance between the temperature sensor 20 and the heating surface 4 is less than 6 cm. In one embodiment, the distance between the temperature sensor 20 and the heating surface 4 is less than 4 cm. In one embodiment, the distance between the temperature sensor 20 and the heating surface 4 is less than 3 cm. In one embodiment, the distance between the temperature sensor 20 and the heating surface 4 is less than 2 cm.

Fig. 3 illustrates an electrically heated cooking device 2 seen from below. The electrically heated cooking device 2 comprises a housing 48. In this embodiment, the heating surface (not visible) is circular. Accordingly, the electrically heated cooking device 2 comprises a plurality of electrical heating elements 30 formed as bended portions extending basically radially (from the centre of the heating surface to the periphery of the heating surface).

The electrically heated cooking device 2 comprises a closing plate 14.

The closing plate 14 is segmented into four quarters each constituting a quarter of a circle. Accordingly, service is eased as only one of the four segments needs to be unscrewed in case of service (during repair or replacement of parts).

In another embodiment, however, the closing plate 14 may be provided as a one-piece body.

The closing plate 14 is by means of nuts 32 screwed on bolts 6 extending downwards from the bottom side of the bottom section constituting the structure having the heating surface as its top surface. Accordingly, the closing plate 14 clamps together the structures sandwiched between the heating surface and the closing plate 14.

The electrically heated cooking device 2 comprises an electric motor 34 arranged and configured to rotate a shaft 36 of a steering device of the electrically heated cooking device 2.

Fig. 4 illustrates a cross-sectional view of a portion of an electrically heated cooking device 2. The electrically heated cooking device 2 comprises a bottom section 50 provided with a heating surface 4 that is configured to heat foodstuff.

In one embodiment, the bottom section 50 is made of steel. In a preferred embodiment, at least the uppermost part of the bottom section 50 is made of stainless steel.

A plurality of bolts 6 are attached to and extends from the lower side of the bottom section 50. Each of the bolts 6 is threaded and configured to receive a nut 32 being screwed to the bolt 6. It is possible to use a washer 38 as contact structure arranged between the nut 32 and the closing plate 14. Accordingly, the washer 38 will be sandwiched between the closing plate 14 and the nut 32.

A thermally conductive filling material 16 is provided at the lower side of the bottom section 50 in order to reduce the thermal resistance and thus facilitate a fast and efficient heat transfer from the electrical heating elements 30 to the heating surface 4 of the bottom section 50.

An upper thermally conducting layer 8 is arranged under the thermally conductive filling material 16. The purpose of the upper thermally conducting layer 8 is to distribute in the best possible manner the heat generated by the electrical heating elements 30 arranged adjacent to the upper thermally conducting layer 8. In one embodiment, the upper thermally conducting layer 8 is made of metal. In a preferred embodiment, the upper thermally conducting layer 8 is made of aluminium. According to the present invention, a lower thermally conducting layer 10 is arranged below the upper thermally conducting layer 8.

The electrical heating elements 30 extend in track structures provided in the lower thermally conducting layer 10. The thickness of the lower thermally conducting layer 10 corresponds to the thickness of the electrical heating elements 30. In one embodiment, the lower thermally conducting layer 10 is made of metal. In a preferred embodiment, the lower thermally conducting layer 10 is made of aluminium.

According to the present invention, the upper thermally conducting layer 8 and the lower thermally conducting layer 10 constitutes a heat distributing portion 18.

A thermally insulating layer 12 is arranged below the lower thermally conducting layer 10. The thermally insulating layer 12 is arranged and configured to thermally insulate the heat distributing portion 18 and thus the lower thermally conducting layer 10 from components below the heat distributing portion 18. Accordingly, the thermally insulating layer 12 will minimize the heat loss caused by heat transfer in downwards direction. In one embodiment, the thermally insulating layer 12 is a plate structure that is form-stable even when a compressive force is exerted to it.

In one embodiment, the closing plate 14 is made of steel. In a preferred embodiment, the closing plate 14 is made of stainless steel.

A plurality of bolts 6 extend through throughbores provided in the upper thermally conducting layer 8, the lower thermally conducting layer 10, the thermally insulating layer 12 as well as the closing plate 14. Accordingly, the nuts 32 will, when screwed tight onto the threaded bolts 6, clamp the upper thermally conducting layer 8, the lower thermally conducting layer 10, the thermally insulating layer 12 as well as the closing plate 14 together. Hereby, it is possible to improve the heat transfer from the heat distributing portion 18 to the heating surface 4.

The electrically heated cooking device 2 comprises a temperature sensor 20 comprising an elongated body portion. The temperature sensor 20 is arranged in a hole 22 extending through the upper thermally conducting layer 8, the lower thermally conducting layer 10, the thermally insulating layer 12 as well as the closing plate 14. The temperature sensor 20 is pressed towards the underside of the bottom section 50 by means of a spring 24 surrounding the body portion of the temperature sensor 20. Accordingly, optimal conditions are provided to allow the temperature sensor 20 to measure the temperature of the bottom section 50. It is possible to provide thermally conductive paste 26 at the distal end of the temperature sensor 20 in order to facilitate the most optimum measuring conditions.

In one embodiment, the distal portion of the temperature sensor 20 is flat and extends parallel to the heating surface 4. This embodiment is advantageous when the hole 22 has a flat end structure extending parallel to the heating surface 4. In one embodiment, the body portion of the temperature sensor 20 is cylindrical. In one embodiment, the hole 22 is cylindrical.

The spring 24 is mounted in a mounting structure 56 that is attached to the closing plate 14. The temperature sensor 20 comprises a front portion having a flange portion onto which the spring 24 presses. The spring 24 presses the front portion of the temperature sensor 20 towards the bottom section 50. The temperature sensor 20 comprises an electric cable 28 that is electrically connected to a control box (not shown). Hereby, it is possible to control the temperature regulation of the electrically heated cooking device 2 on the basis of the temperatures detected by the temperature sensor 20.

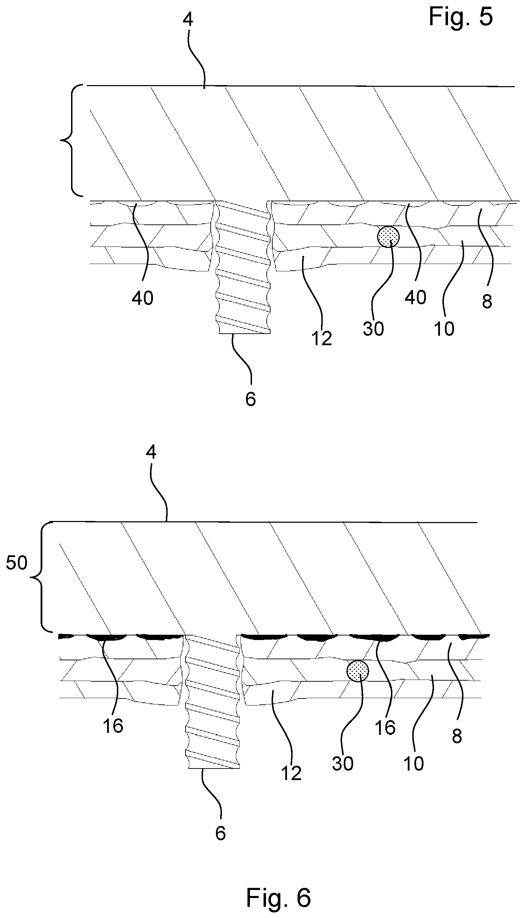

Fig. 5 illustrates a cross-sectional view of a portion of an electrically heated cooking device 2. The electrically heated cooking device 2 basically corresponds to the one shown in and explained with reference to Fig. 4. No thermally conductive filling material is, however, provided between the bottom section 50 and the upper thermally conducting layer 8.

It can be seen that a plurality of air gaps 40 are provided between the lower surface of the bottom section 50 and the upper thermally conducting layer 8. These air gaps 40 are, however, exaggerated for illustration purposes.

The air gaps 40 make it difficult to provide a fast and efficient heat transfer from the electrical heating element 30 to the heating surface 4.

Fig. 6 illustrates the electrically heated cooking device 2 shown in Fig. 5, in a configuration in which a thermally conductive filling material 16 is provided between the bottom section 50 and the upper thermally conducting layer 8. Accordingly, the air gaps 40 (shown in Fig. 5) have been filled out with the thermally conductive filling material 16. Since the thermal resistance of the thermally conductive filling material 16 is much lower than the thermal resistance of air, filling out the air gaps with thermally conductive filling material 16 will enable an improved heat transfer from the electrical heating element 30 to the heating surface 4.

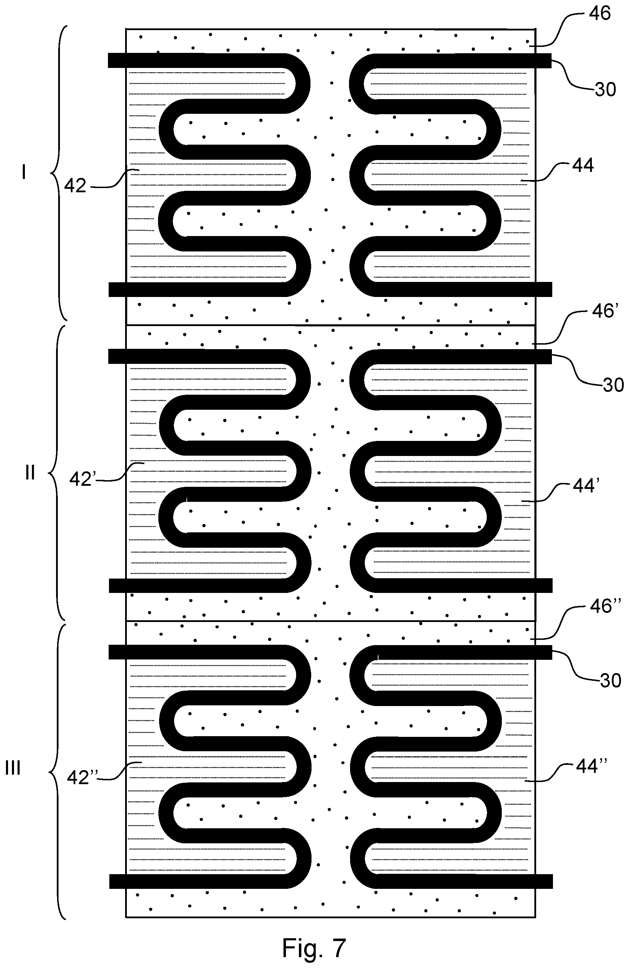

Fig. 7 illustrates a schematic view of a configuration of the electrical heating elements 30 of an electrically heated cooking device. The electrical heating elements 30 are arranged in a configuration intended to fit an electrically heated cooking device having a rectangular geometry.

It can be seen that the heating elements 30 are arranged in three equally sized segments I, II, III. In each segment I, II, III, a centrally arranged 46, 46', 46" central section is placed adjacent to two symmetrically arranged heating elements 30. A first finger section 42, 42', 42" is arranged on the left side of the left heating element 30, while a second finger section 44, 44', 44" is arranged on the right side of the right heating element 30.

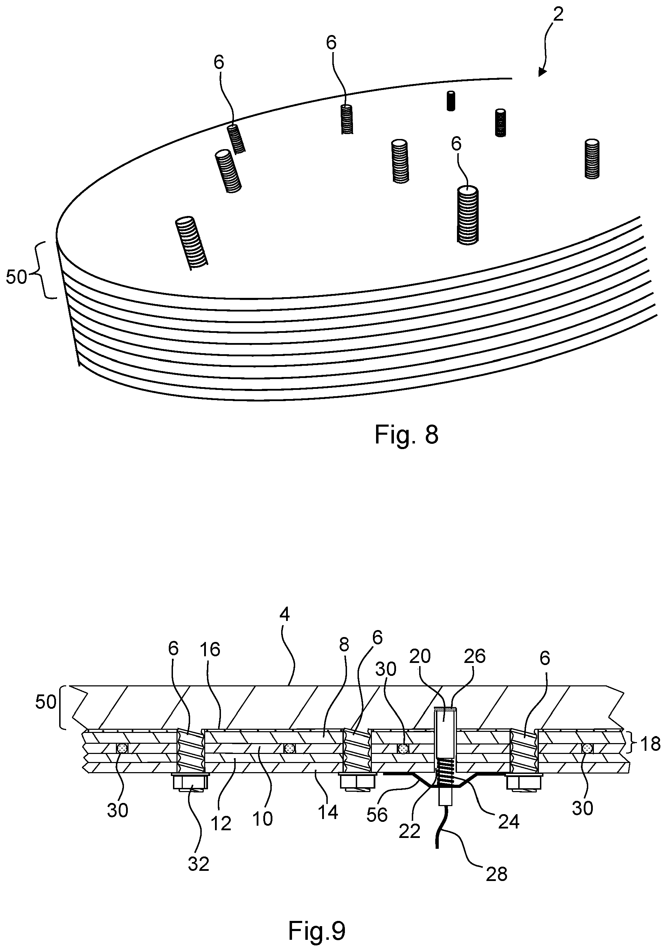

Fig. 8 illustrates a perspective view of the bottom side of the bottom portion 50 of an electrically heated cooking device 2. A plurality of threaded bolts 6 extend from the bottom side of the bottom section 50. Before mounting an upper thermally conducting layer 8 to the bottom portion 50 by means of the bolts 6, a layer of thermally conductive filling material is applied to the bottom side of the bottom portion 50.

Fig. 9 illustrates a cross-sectional view of a portion of an electrically heated cooking device 2. The electrically heated cooking device 2 basically corresponds to the one shown in and explained with reference to Fig. 4. The bore 22, however, extends into the bottom section 50. Therefore, the distal portion of the temperature sensor 20 is provided in a shorter distance from the heating surface 4.

In one embodiment, the thickness of the bottom section 50 is in the range 1-10 mm.

In one embodiment, the thickness of the bottom section 50 is in the range 2-7 mm.

In one embodiment, the thickness of the bottom section 50 is in the range 3-5 mm.

In one embodiment, the hole 22 extends into half the thickness of the bottom section 50.

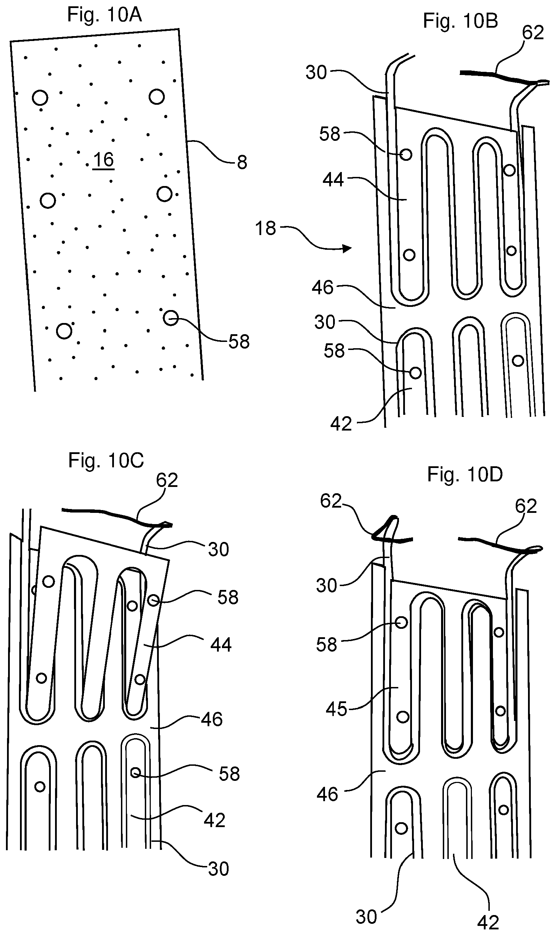

Fig. 10A illustrates a bottom view of an upper thermally conducting layer 8 of an electrically heated cooking device. The thermally conducting layer 8 is provided with throughbores 58 extending all the way through the thermally conducting layer 8. In a preferred embodiment, the thermally conducting layer 8 is a plate made of aluminium.

The thermally conducting layer 8 is treated with a layer of thermally conductive filling material 16 that can fill up air gaps in the thermally conducting layer 8 or the structures that are placed on the thermally conducting layer 8.

The thermally conducting layer 8 comprises several throughbores 58 provided to allow the thermally conducting layer 8 to be mounted on a bottom section (not shown) provided with bolts extending therefrom.

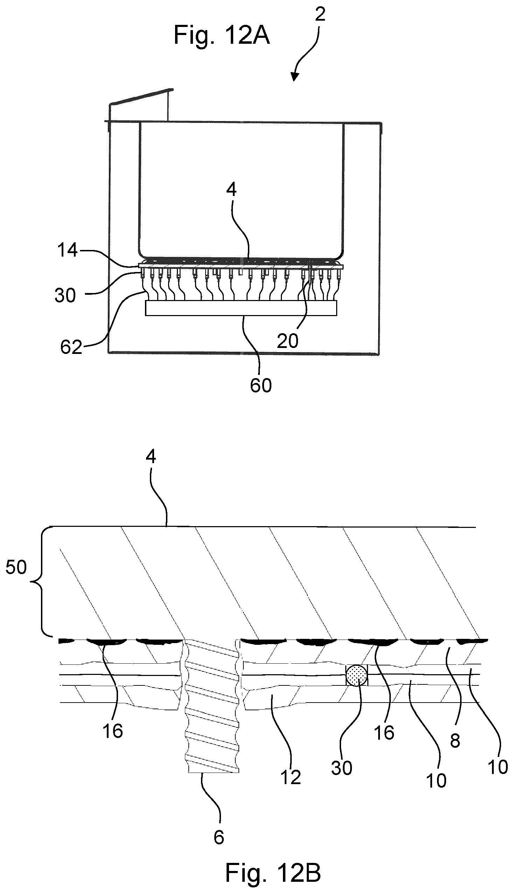

Fig. 10B illustrates a bottom view of a heat distributing portion 18 of an electrically heated cooking device. The heat distributing portion 18 comprises several components that are provided with throughbores 58 for mounting the components to the bolts of the bottom section (not shown). The heat distributing portion 18 surrounds two heating elements 30. The heating elements 30 extend in a track provided between the components of the heat distributing portion 18. Each heating element 30 comprises an electric cable 62 allowing the heating element 30 to be electrically connected to a control unit as shown in Fig. 12A.

The heat distributing portion 18 comprises three components: a central section 46 and two finger sections 42, 44. Since the components 42, 44, 46 are spaced apart, a track structure that fits the geometry of the heating elements 30 is provided in the heat distributing portion 18.

Fig. 10C illustrates a bottom view of the heat distributing portion 18 shown in Fig. 10B in a configuration, in which a finger section 44 is being removed in order to make the underlying finger section 44 visible.

In Fig. 10D it can be seen that one of the finger sections 44 has been removed.

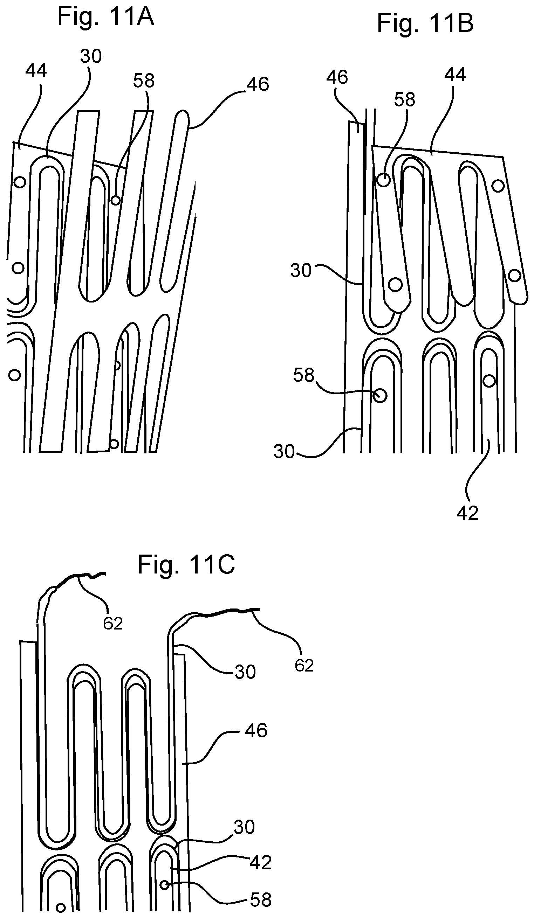

Fig. 11A illustrates a bottom view of the heat distributing portion 18 shown in Fig. 10D in a configuration in which a central section 46 is being removed in order to make the underlying central section 47 visible.

Fig. 11B illustrates a bottom view of the heat distributing portion 18 shown in Fig. 11A in a configuration in which a finger section 45 is being removed. Throughbores 58 are provided in the finger section 45.

Fig. 11C illustrates the heat distributing portion 18 shown in Fig. 11B in a configuration in which the finger section 45 (shown in Fig. 11B) has been removed.

The heat distributing portion 18 shown in Fig. 10A, Fig. 10B, Fig. 10C, Fig. 10D, Fig. 11A, Fig. 11B and Fig. 11C comprises a two thermally conducting layers structure that surrounds the electrical heating elements 30. Together, the two thermally conducting layers comprise four finger sections 42, 44, 45 and two central sections 46, 47. Alternatively to the two thermally conducting layers, it is possible to have a single thermally conducting layer that surrounds the electrical heating elements 30 as shown in Fig. 5 and in Fig. 6.

Fig. 12A illustrates a schematic view of an electrically heated cooking device 2. The electrically heated cooking device 2 basically corresponds to the one shown in Fig. 1. The electrically heated cooking device 2 comprises a control unit 60 and several electrical heating elements 30 that are electrically connected to the control unit 60 by means of electric cables 62.

The electrically heated cooking device 2 comprises a temperature sensor 20 that is electrically connected to the control unit 60 by means of electric cables 62. Accordingly, the temperature sensor 20 provides the control unit 60 with temperature measurements conducted by the temperature sensor 20. The control unit 60 uses these temperature measurements to regulate the activity (and thus temperature) of the electrical heating elements 30 in order to provide the desired temperature at the heating surface 4 at any time. The distal ends of the electrical heating elements 30 extend through the closing plate 14.

Fig. 12B illustrates an electrically heated cooking device 2 according to the invention. The electrically heated cooking device 2 basically corresponds to the one shown in Fig. 6. The electrically heated cooking device 2, however, comprises two lower thermally conducting layers 10 stacked on top of each other. This construction corresponds to the one shown in Fig. 10A, Fig. 10B, Fig. 10C, Fig. 10D, Fig. 11A, Fig. 11B and Fig. 11C. The thickness of the electrical heating element 30 corresponds to the thickness of the two lower thermally conducting layers 10.

### List of reference numerals

- 2: Electrically heated cooking device
- 4: Heating surface
- 6: Bolt
- 8: Thermally conducting layer
- 10: Thermally conducting layer
- 12: Thermally insulating layer
- 14: Closing plate
- 16: Thermally conductive filling material
- 18: Heat distributing portion
- 20: Temperature sensor
- 22: Hole
- 24: Spring
- 26: Thermally conductive paste
- 28: Electric cable
- 30: Electrical heating element
- 32: Nut
- 34: Electric motor
- 36: Shaft
- 38: Washer
- 40: Air gap
- 42, 42', 42": Finger section
- 44, 44', 44": Finger section
- 45: Finger section
- 46, 46', 46": Central section
- 47: Central section
- 48: Housing
- 50: Bottom section
- 52: Inner space
- 54: Side wall
- 56: Mounting structure
- 58: Throughbore
- 60: Control unit
- 62: Electric cable
- F: Force
- I, II, III: Segment

## Claims

1. An electrically heated cooking device (2) comprising a housing (48) having an inner space (52) comprising a heating surface (4) being the upper surface of a bottom section (50), wherein the inner space (52) is defined by a side wall (54) extending from the heating surface (4), wherein the inner space (52) is configured to receive foodstuff or a liquid to be cooked or heated, wherein the electrically heated cooking device (2) comprises a plurality of electrical heating elements (30) integrated in a heat distributing portion (18) provided below and being in thermal contact with the bottom section (50), wherein the electrically heated cooking device (2) comprises a control unit (60) configured to regulate the heat generation of the electrical heating elements (30), wherein the electrically heated cooking device (2) comprises a temperature sensor (20) arranged in a hole (22) extending through the heat distributing portion (18), wherein the temperature sensor (20) is spring loaded so that a force (F) presses the temperature sensor (20) in a direction towards the heating surface (4), wherein the temperature sensor (20) is communicatively connected to the control unit (60), **characterised in that** the heat distributing portion (18) is constituted of an upper thermally conducting layer (8) and a lower thermally conducting layer (10), the lower thermally conducting layer being arranged below the upper thermally conducting layer (8), and **in that** a plurality of threaded bolts (6) extending from the bottom side of the bottom section (50), wherein the bolts (6) extend through bores provided in the layers (8, 10, 12, 14) arranged below the bottom section (50), wherein a nut (50) is attached to each bolt (6) in order to press the heat distributing portion (18) towards the bottom section (50).

2. An electrically heated cooking device (2) according to claim 1, **characterised in that** the heating surface (4) is flat.

3. An electrically heated cooking device (2) according to claim 1 or claim 2, **characterised in that** the hole (22) extends through the entire heat distributing portion (18) and that the temperature sensor (20) abuts the bottom section (50).

4. An electrically heated cooking device (2) according to claim 3, **characterised in that** the hole (22) extends through a portion of the bottom section (50).

5. An electrically heated cooking device (2) according to one of the preceding claims, **characterised in that** the longitudinal axis of the sensor (20) extends perpendicular to the heating surface (4).

6. An electrically heated cooking device (2) according to one of the preceding claims, **characterised in that** the electrical heating elements (30) are arranged in a layer adjacent to and below the upper thermally conducting layer (8).

7. An electrically heated cooking device (2) according to claim 6, **characterised in that** the electrical heating elements (30) are arranged in tracks provided in the lower thermally conducting layer (10).

8. An electrically heated cooking device (2) according to claim 6 or 7, **characterised in that** the upper thermally conducting layer (8) is arranged under a thermally conductive filling material (16) that is sandwiched between the upper thermally conducting layer (8) and the bottom section (50).

9. An electrically heated cooking device (2) according to one of the preceding claims 6-8, **characterised in that** a thermally insulating layer (12) is arranged below the lower thermally conducting layer (10).

10. An electrically heated cooking device (2) according to one of the preceding claims, **characterised in that** the electrically heated cooking device (2) comprises a closing plate (14) that is provided below the heat distributing portion (18), wherein the closing plate (14) is configured to clamp the components of the heat distributing portion (18) together.

## Patentansprüche

1. Elektrisch beheizte Kochvorrichtung (2), die ein Gehäuse (48) umfasst, das einen Innenraum (52) aufweist, der eine Heizfläche (4) umfasst, welche die obere Fläche eines Bodenabschnitts (50) ist, wobei der Innenraum (52) durch eine Seitenwand (54) definiert ist, die sich von der Heizfläche (4) erstreckt, wobei der Innenraum (52) konfiguriert ist, um Lebensmittel oder eine zu kochende oder zu erwärmende Flüssigkeit aufzunehmen, wobei die elektrisch beheizte Kochvorrichtung (2) eine Vielzahl von elektrischen Heizelementen (30) umfasst, die in einen wärmeverteilenden Abschnitt (18) integriert sind, der unter dem Bodenabschnitt (50) vorgesehen und mit diesem in thermischem Kontakt ist, wobei die elektrisch beheizte Kochvorrichtung (2) eine Steuereinheit (60) umfasst, die konfiguriert ist, die Wärmeerzeugung der elektrischen Heizelementen (30) zu regeln, wobei die elektrisch beheizte Kochvorrichtung (2) einen Temperatursensor (20) umfasst, der in einer Bohrung (22) angeordnet ist, die sich durch den wärmeverteilenden Abschnitt (18) erstreckt, wobei der Temperatursensor (20) federbelastet ist, so dass eine Kraft (F) den Temperatursensor (20) in eine Richtung zur Heizfläche (4) hin drückt, wobei der Temperatursensor (20) kommunikativ mit der Steuereinheit (60) verbunden ist, **dadurch gekennzeichnet dass** der wärmeverteilende Abschnitt (18) aus einer oberen wärmeleitenden Schicht (8) und einer unteren wärmeleitenden Schicht (10) besteht, wobei die untere wärmeleitende Schicht unter der oberen wärmeleitenden Schicht (8) angeordnet ist, und dadurch, dass eine Vielzahl von Gewindebolzen (6) sich von der Unterseite des Bodenabschnitts (50) erstrecken, wobei die Bolzen (6) durch Bohrungen verlaufen, die in den Schichten (8, 10, 12, 14) vorgesehen sind, die unter dem Bodenabschnitt (50) angeordnet sind, wobei eine Mutter (50) an jedem Bolzen (6) angebracht ist, um den wärmeverteilenden Abschnitt (18) zu dem Bodenabschnitt (50) zu pressen.

2. Elektrisch beheizte Kochvorrichtung (2) nach Anspruch 1, **dadurch gekennzeichnet, dass** die Heizfläche (4) eben ist.

3. Elektrisch beheizte Kochvorrichtung (2) nach Anspruch 1 oder Anspruch 2, **dadurch gekennzeichnet, dass** sich die Bohrung (22) durch den gesamten wärmeverteilenden Abschnitt (18) erstreckt und der Temperatursensor (20) an den unteren Abschnitt (50) angrenzt.

4. Elektrisch beheizte Kochvorrichtung (2) nach Anspruch 3, **dadurch gekennzeichnet, dass** sich die Bohrung (22) durch einen Teil des Bodenabschnitts (50) erstreckt.

5. Elektrisch beheizte Kochvorrichtung (2) nach einem der vorstehenden Ansprüche, **dadurch gekennzeichnet, dass** die Längsachse des Sensors (20) senkrecht zur Heizfläche (4) verläuft.

6. Elektrisch beheizte Kochvorrichtung (2) nach einem der vorstehenden Ansprüche, **dadurch gekennzeichnet, dass**
die elektrischen Heizelemente (30) in einer Schicht angeordnet sind, die benachbart zu und unter der oberen wärmeleitenden Schicht (8) liegt.

7. Elektrisch beheizte Kochvorrichtung (2) nach Anspruch 6, **dadurch gekennzeichnet, dass**
die elektrischen Heizelemente (30) in Bahnen angeordnet sind, die in der unteren wärmeleitenden Schicht (10) vorgesehen sind.

8. Elektrisch beheizte Kochvorrichtung (2) nach Anspruch 6 oder 7, **dadurch gekennzeichnet, dass** die die obere wärmeleitende Schicht (8) unter einem wärmeleitenden Füllmaterial (16) angeordnet ist, das zwischen der oberen wärmeleitenden Schicht (8) und dem Bodenabschnitt (50) eingeklemmt ist.

9. Elektrisch beheizte Kochvorrichtung (2) nach einem der vorstehenden Ansprüche 6-8, **dadurch gekennzeichnet, dass** eine wärmeisolierende Schicht (12) unter der unteren wärmeleitenden Schicht (10) angeordnet ist.

10. Elektrisch beheizte Kochvorrichtung (2) nach einem der vorstehenden Ansprüche, **dadurch gekennzeichnet, dass** die elektrisch beheizte Kochvorrichtung (2) eine Abschlussplatte (14) umfasst, die unter dem wärmeverteilenden Abschnitt (18) vorgesehen ist, wobei die Abschlussplatte (14) konfiguriert ist, um die Komponenten des wärmeverteilenden Abschnitts (18) zusammenzuklemmen.

## Revendications

1. Dispositif de cuisson à chauffage électrique (2) comprenant un boîtier (48) présentant un espace intérieur (52) comprenant une surface chauffante (4) étant la surface supérieure d'une section inférieure (50), dans lequel l'espace intérieur (52) est défini par une paroi latérale (54) s'étendant depuis la surface chauffante (4), dans lequel l'espace intérieur (52) est configuré pour recevoir des aliments ou un liquide à cuire ou à chauffer, dans lequel le dispositif de cuisson à chauffage électrique (2) comprend une pluralité d'éléments chauffants électriques (30) intégrés dans une partie de distribution de chaleur (18) prévue en dessous et étant en contact thermique avec la section inférieure (50), dans lequel le dispositif de cuisson à chauffage électrique (2) comprend une unité de commande (60) configurée pour réguler la génération de chaleur des éléments chauffants électriques (30), dans lequel le dispositif de cuisson à chauffage électrique (2) comprend un capteur de température (20) agencé dans un orifice (22) s'étendant à travers la partie de distribution de chaleur (18), dans lequel le capteur de température (20) est monté sur ressort de sorte qu'une force (F) comprime le capteur de température (20) dans une direction vers la surface chauffante (4), dans lequel le capteur de température (20) est relié de manière communicative à l'unité de commande (60), **caractérisé en ce que** la partie de distribution de chaleur (18) est constituée d'une couche thermoconductrice supérieure (8) et d'une couche thermoconductrice inférieure (10), la couche thermoconductrice inférieure étant agencée sous la couche thermoconductrice supérieure (8), et **en ce qu'**une pluralité de boulons filetés (6) s'étendant du côté inférieur de la section inférieure (50), dans lequel les boulons (6) s'étendent à travers des alésages prévus dans les couches (8, 10, 12, 14) agencés sous la section inférieure (50), dans lequel un écrou (50) est fixé à chaque boulon (6) afin de comprimer la partie de distribution de chaleur (18) vers la section inférieure (50).

2. Dispositif de cuisson à chauffage électrique (2) selon la revendication 1, **caractérisé en ce que** la surface chauffante (4) est plate.

3. Dispositif de cuisson à chauffage électrique (2) selon la revendication 1 ou la revendication 2, **caractérisé en ce que** l'orifice (22) s'étend à travers toute la partie de distribution de chaleur (18) et **en ce que** le capteur de température (20) vient en butée contre la section inférieure (50).

4. Dispositif de cuisson à chauffage électrique (2) selon la revendication 3, **caractérisé en ce que** l'orifice (22) s'étend à travers une partie de la section inférieure (50).

5. Dispositif de cuisson à chauffage électrique (2) selon l'une des revendications précédentes, **caractérisé en ce que** l'axe longitudinal du capteur (20) s'étend perpendiculairement à la surface chauffante (4).

6. Dispositif de cuisson à chauffage électrique (2) selon l'une des revendications précédentes, **caractérisé en ce que**
les éléments chauffants électriques (30) sont agencés dans une couche adjacente et inférieure à la couche thermoconductrice supérieure (8).

7. Dispositif de cuisson à chauffage électrique (2) selon la revendication 6, **caractérisé en ce que**
les éléments chauffants électriques (30) sont agencés dans des pistes prévues dans la couche thermoconductrice inférieure (10).

8. Dispositif de cuisson à chauffage électrique (2) selon la revendication 6 ou 7, **caractérisé en ce que** la couche thermoconductrice supérieure (8) est agencée sous un matériau de remplissage thermoconducteur (16) qui est pris en sandwich entre la couche thermoconductrice supérieure (8) et la section inférieure (50).

9. Dispositif de cuisson à chauffage électrique (2) selon l'une des revendications 6-8 précédentes, **caractérisé en ce qu'**une couche thermiquement isolante (12) est agencée sous la couche thermoconductrice inférieure (10).

10. Dispositif de cuisson à chauffage électrique (2) selon l'une des revendications précédentes, **caractérisé en ce que** le dispositif de cuisson à chauffage électrique (2) comprend une plaque de fermeture (14) qui est prévue sous la partie de distribution de chaleur (18), dans lequel la plaque de fermeture (14) est configurée pour serrer ensemble les composants de la partie de distribution de chaleur (18).
